(19) **Europäisches Patentamt / European Patent Office / Office européen des brevets**

(11) **EP 3 953 317 B1**

(12) **FASCICULE DE BREVET EUROPEEN**

(45) Date de publication et mention de la délivrance du brevet:
**21.08.2024 Bulletin 2024/34**

(21) Numéro de dépôt: **20717874.0**

(22) Date de dépôt: **09.04.2020**

(51) Classification Internationale des Brevets (IPC):
**C06B 21/00** *(2006.01)* **C06B 45/04** *(2006.01)*

(52) Classification Coopérative des Brevets (CPC):
**C06B 45/04; C06B 21/0083**

(86) Numéro de dépôt international:
**PCT/EP2020/060267**

(87) Numéro de publication internationale:
**WO 2020/208195 (15.10.2020 Gazette 2020/42)**

(54) **NOUVEAU MATÉRIAU ENERGÉTIQUE COMPOSITE ET SON PROCÉDÉ DE FABRICATION**

NEUES ENERGIEFREISETZENDES VERBUNDSTOFFMATERIAL UND VERFAHREN ZUR HERSTELLUNG DAVON

NEW ENERGY-RELEASING COMPOSITE MATERIAL AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2019 BE 201905228**

(43) Date de publication de la demande:
**16.02.2022 Bulletin 2022/07**

(73) Titulaires:
- **ECOLE ROYALE MILITAIRE**
  **1000 Bruxelles (BE)**
- **Centre National de la Recherche Scientifique - CNRS**
  **75794 Paris Cedex 16 (FR)**

(72) Inventeurs:
- **VAN RIET, Romuald, Jean-Pierre**
  **1140 Evere (BE)**
- **OVIN ANIA, Maria Concepcion**
  **45000 Orléans (FR)**
- **LEFEBVRE, Michel, Henri, Jean-Marie**
  **1170 Watermael-Boitsfort (BE)**
- **LODEWYCKX, Peter, Jean, Joseph**
  **3010 Kessel-Lo (BE)**

(74) Mandataire: **Calysta NV**
**Lambroekstraat 5a**
**1831 Diegem (BE)**

(56) Documents cités:
EP-A1- 2 138 180    EP-A2- 2 045 230
GB-A- 534 900    US-A1- 2003 097 953
US-B1- 6 666 935

**Description**

La présente invention se rapporte à un matériau énergétique composite comprenant au moins un matériau nanoporeux et au moins un oxydant inorganique ainsi qu'à son utilisation et son procédé de production.

Un matériau énergétique est un matériau ou mélange de matériaux qui est capable de dégager rapidement de l'énergie par réaction chimique. Les matériaux énergétiques sont catégorisés généralement en 3 classes en fonction de leur application: les poudres propulsives, les explosifs brisants, les compositions pyrotechniques. Les matériaux pyrotechniques et les poudres propulsives dégagent de l'énergie par un processus de déflagration alors que les explosifs dégagent de l'énergie par un processus de détonation.

Les matériaux énergétiques sont également regroupés principalement en deux groupes, en fonction de leur composition.

Le premier groupe est formé par les matériaux énergétiques composés d'une substance comprenant d'une part des groupes oxydants et d'autre part des groupes carburants, à l'échelle moléculaire. Il s'agit donc de matériaux énergétiques comme par exemple, le trinitrotoluène, l'hexogène (RDX), l'octogène (HMX), la nitrocellulose, la nitroglycérine.

Dans ce premier groupe, il existe des matériaux relativement anciens, utilisés depuis la deuxième guerre mondiale et qui font aujourd'hui l'objet de grandes difficultés (comme la nitrocellulose qui présente des problèmes d'instabilité chimique ou les explosifs primaires qui contiennent du plomb qui est en voie d'interdiction du règlement REACH). Il existe en outre quelques recherches actuelles qui visent au remplacement de ces matériaux anciens par des matériaux à structure moléculaire plus complexe. Toutefois, aujourd'hui la production industrielle n'est pas encore d'actualité en ce que le compromis entre coût et rendement n'est pas encore atteint.

Le deuxième groupe est formé par les matériaux énergétiques comprenant un oxydant et un carburant sous forme de mélange ou de matériaux énergétiques composites. Un matériau énergétique composite est un mélange de substances dont l'une possède un caractère principalement comburant (l'oxydant) et l'autre a un caractère principalement carburant.

Par exemple, le propergol composite est un matériau énergétique par excellence, utilisé comme poudre propulsive pour fusées. Ce matériau est composé d'un oxydant comme par exemple le perchlorate d'ammonium, de poudre d'aluminium dans une matrice polymère qui sert de carburant (par exemple, HTPB - polybutadiène à terminaison hydroxyle). L'aluminium sert également de carburant.

Toutefois, ce propergol est difficile à mettre en forme dans les moteurs et produit des fumées toxiques (HCl) tout en présentant des performances en matière de propriété de combustion limitées. Les particules qui y sont utilisées (oxydant et aluminium) sont micrométriques et les recherches tendent actuellement à réduire la taille de ces particules à l'échelle nanométrique. Ces nanoparticules, si elles permettent d'atteindre des performances supérieures, restent néanmoins extrêmement chères à produire et présentent des dangers en matière de toxicité et d'écotoxicité.

On trouve aussi dans ce deuxième groupe, des matériaux énergétiques composites comprenant au moins un oxydant et au moins un matériau nanoporeux à base de silicium nanoporeux qui joue le rôle de carburant.

Par les termes matériau nanoporeux, on entend un matériau comprenant des pores de taille nanométrique, c'est-à-dire présentant une taille inférieure à 100 nm. En effet, le terme « nanoporeux » pour désigner un matériau signifie que le matériau comprend des micropores, des mésopores et des macropores avec une limite supérieure d'environ 100 nm. Ces matériaux nanoporeux comprennent des micropores dont la taille des pores n'excède pas 2 nm, des mésopores qui ont une taille intermédiaire comprise entre 2 et 50 nm et macropores dont la taille des pores est supérieure à 50 nm. Cette définition est reprise dans la nomenclature de l'union internationale de la chimie fondamentale et appliquée (IUPAC pour International Union of Pure and Applied Chemistry, voir l'ouvrage « Physisorption of gases, with special reference to the évaluation », compilé par M. Thommes et al. UIPAC 2015 Pure Appl. Chem. 2015 ; 87(9-10) :1051-1069.

Le document « A decade of porous silicon as nano-explosive material», Monuko du Plessis, pages 1-17, décrit à titre d'exemple un matériau énergétique à base de silicium poreux sous forme de tranche ou couche mince qui présente des nanopores à la surface du silicium poreux. Les nanopores sont remplis avec un oxydant et présente une proportion molaire de l'oxydant au silicium qui est comprise entre 0.1 et 0.5.

Ce document fait référence à la production d'un flash de lumière et d'un « pop» audible lorsque de l'acide nitrique concentré a été versé goutte à goutte sur la surface d'une tranche de silicium poreux, production qui n'a pas pu être reproduite avec des gouttes d'acide sulfurique. Selon les auteurs, seul le silicium poreux anodisé a montré une réaction violente.

Par ailleurs, il est également fait référence à la préparation de nanoparticules de silicium d'un diamètre compris entre 7 et 20 nm sur lequel une goutte d'acide nitrique concentré a permis de produire un éclair lumineux extrêmement brillant qui était maintenu dans le temps.

Ce document indique également qu'il a été rapporté qu'on pouvait réaliser des nano-explosions à des températures cryogéniques sur du silicium poreux en présence d'oxygène liquide. En effet, le silicium poreux présente des pores dont la surface interne est pratiquement intégralement recouverte d'hydrogène.

La conclusion selon les auteurs réside dans le fait que le type d'oxydant, la morphologie et la structure du silicium poreux déterminera la catégorie explosive du matériau. Bien que les nanoparticules de silicium présentent une constante d'oxydation linéaire de premier ordre bien plus importante que le silicium poreux en tranche ou couche mince voire bien plus importante que celui des matériaux énergétiques organiques, ces nanoparticules montrent toutefois de nombreuses limitations tant dans les applications que dans les conditions nécessaires pour mettre en évidence leur caractère énergétique.

Ce document se focalise sur la préparation de silicium poreux préparé par une technique d'attaque électrochimique dans un électrolyte porogène comprenant de l'acide fluorhydrique HF et de l'éthanol. Ceci permet la création de pores dont la surface intérieure est recouverte d'hydrogène formant des groupes $Si-H_x$ qui seront remplacés au cours du temps par des groupes $Si-O_x$ en présence d'une imprégnation au nitrate. La présence de ces groupes $Si-O_x$ conduit, selon ce document, à une instabilité du matériau énergétique au cours du temps.

De plus, le silicium nanoporeux est produit en couche mince de quelques micromètres et est donc considéré comme un matériau bidimensionnel dans lequel l'oxydant n'atteint que les pores en surface et ne parvient pas à pénétrer la porosité profonde du silicium nanoporeux. En outre, lors de sa combustion en présence de l'oxydant, il va y avoir une production de dioxyde de silicium qui passera rapidement en phase condensée liquide ou solide ce qui en limite d'autant plus les applications.

Par ailleurs, les applications pratiques à grande échelle semblent compromises pour ce type de silicium nanoporeux. En effet, les procédés de synthèse sont extrêmement coûteux et les matériaux qui en sont issus présentent des problèmes de toxicité et des problèmes environnementaux.

On connait du document EP 2 045 230 également une composition énergétique à décomposition contrôlée comprenant un matériau organique et un matériau poreux comprenant un taux de porosité au moins égal à 10%. Le matériau organique est constitué d'un matériau explosif ou non explosif, organique ou minéral et, c'est-à-dire par exemple de l'hexogène, (RDX), de l'octogène (HMX), de l'hexanitrohexaazaisowurtzitane (CL 20), de la pentrite (PETN) ou de l'oxynitrotriazole (ONTA); du perchlorate d'ammonium, du perchlorate de potassium, du perchlorate de sodium, du nitrate d'ammonium ou de potassium, de l'azoture de sodium ou de potassium, du peroxyde de baryum ou encore un matériau pouvant être gazéifié mais non explosif (polymères, agents porogènes, oxalates...). Le matériau poreux est un matériau micro-, méso- ou macroporeux et peut être oxyde, un métal, un métalloïde ou un matériau minéral ou organique tel par exemple que des nanotubes de carbone. Malheureusement, cette composition nécessite l'addition d'un matériau réducteur ou oxydant pour obtenir des effets intéressants en matière de performance.

De plus, les applications de ce type de composition sont limitées à la pyrotechnie.

On connaît aussi du document US 6 666 935 un matériau énergétique comprenant un produit de polycondensation de la résorcine avec du formaldéhyde (résine), utilisé comme matériau poreux avec un oxydant.

Malheureusement, la combustion de ce type de matériaux est beaucoup moins énergétique car une portion significative du carbone est déjà oxydée, limitant par là l'énergie dégagée lors de la réaction.

Au vu de ce qui précède, il existe donc un besoin général de disposer de matériaux énergétiques composites qui allient haute performance, sécurité, réactivité et polyvalence et qui peuvent être produits de manière reproductible et en quantité industrielle.

La présente invention a pour but de répondre à ce besoin ainsi qu'aux inconvénients précités en procurant un matériau énergétique composite alliant la performance, sécurité, réactivité et polyvalence et qui peut être produit de manière reproductible et simple.

A cette fin, la présente invention procure un matériau énergétique composite tel qu'indiqué au début, caractérisé en ce que ledit matériau nanoporeux est un matériau carboné nanoporeux, ledit matériau énergétique composite présente une température d'initiation de la décomposition sur un thermogramme obtenu par calorimétrie différentielle à balayage inférieure à 5 °C/minute dans un creuset fermé (Température de début de pic DSC) de préférence de 50 °C à 200 °C, plus préférentiellement de 100 °C à 150 °C, par rapport à la température d'initiation de la décomposition sur le thermogramme DSC de l'oxydant inorganique, ledit matériau énergétique présentant et présente au moins 30%, de préférence au moins 50%, de manière particulièrement préférentielle au moins 70%, de manière encore plus préférentielle au moins 80% de la porosité occupée par ledit oxydant inorganique, et au plus 90% de la porosité, de préférence au plus 95%, plus particulièrement au plus 97%, plus préférentiellement au plus 98%, de manière encore plus préférentielle au plus de 99.9% de la porosité occupée par ledit oxydant inorganique, ledit matériau énergétique présentant une sensibilité à l'impact d'au moins 2 J.

Par matériau carboné nanoporeux selon la présente invention, on entend un matériau carboné nanoporeux formé majoritairement de carbone, par exemple comprenant au moins 70% en poids de carbone par rapport au poids total dudit matériau carboné nanoporeux, et comprenant un réseau de pores interconnectés selon un arrangement tridimensionnel de pores qui s'étendent à travers le volume des particules de matériau carboné nanoporeux. Comme indiqué précédemment, le matériau carboné nanoporeux comprend au moins des micropores dont la taille des pores n'excède pas 2 nm ou des mésopores qui ont une taille intermédiaire comprise entre 2 et 50 nm ou à la fois des micropores et des mésopores et éventuellement des macropores dont la taille des pores est supérieure à 50 nm. Un tel matériau carboné nanoporeux est à distinguer des nanotubes de carbone au motif que les nanotubes de carbones ne présentent pas de pores selon un arrangement tridimensionnel, mais au contraire, la porosité est unidimensionnelle ce qui retire toute propriété mécanique tridimensionnelle au matériau.. Le matériau carboné nanoporeux selon la présente invention présente donc une matrice continue munie de ladite porosité tridimensionnelle désordonné ou ordonné, au contraire d'un aggloméra de nanotubes de carbones qui est formé d'un assemblage de nanotubes dans lequel on ne trouve pas de matrice continue.

Typiquement, une telle porosité tridimensionnelle est observable par des techniques conventionnelles bien connue du spécialiste en la matière, comme par exemple la porosimétrie au mercure ou la porosimétrie par adsoprtion de gaz (typiquement azote ou argon à température cryogénique).

Par la température d'initiation de la décomposition, on entend la température du début du pic de décomposition sur un thermogramme obtenu par calorimétrie différentielle à balayage inférieure à 5 °C/minute dans un creuset fermé.

Il a donc été mis en évidence de manière surprenante qu'il était possible de produire, à partir d'un matériau carboné nanoporeux, un matériau énergétique à faible coût, à l'échelle industrielle qui ne présente pas de toxicité ou d'écotoxicité tout en permettant de garder un très bon rapport entre la performance et la sensibilité du matériau énergétique composite selon la présente invention.

En effet, le matériau énergétique selon la présente invention présente une capacité d'adsorption remarquablement haute de l'oxydant suivie d'un remplissage dans les différents types de pores de la porosité totale permettant d'atteindre une proportion de l'oxydant au carburant importante, également due aux interactions intermoléculaires entre le matériau carboné nanoporeux et l'oxydant inorganique. Le matériau carboné nanoporeux, par la différence de température d'initiation de la décomposition entre le matériau énergétique composite et l'oxydant pur permet d'obtenir les performances d'un matériau énergétique composite à l'échelle nanométrique sans présenter les inconvénients du nanométrique. En effet, ce matériau ne comprend pas de nanoparticules libres.

Selon la présente invention, comme indiqué précédemment, au moins 30%, de préférence au moins 50%, de manière particulièrement préférentielle au moins 70%, de manière encore plus préférentielle au moins 80% de la porosité du matériau énergétique est occupée par ledit oxydant inorganique, et au plus 90% de la porosité, de préférence au plus 95%, plus particulièrement au plus 97%, plus préférentiellement au plus 98%, de manière encore plus préférentielle au plus de 99.9% de la porosité du matériau énergétique est occupée par ledit oxydant inorganique. Le % de la porosité occupée par ledit oxydant inorganique peut être mesurée de deux manières.

Selon une première méthode, on mesure la porosité (volume poreux) ($P_c$) du matériau carboné nanoporeux avant imprégnation par ledit oxydant inorganique et la porosité du matériau énergétique (volume poreux par unité de masse de carbone nanoporeux ($P_{me}$)). Ensuite, on soustrait $P_{me}$ à $P_c$ pour obtenir le volume poreux occupé par l'oxydant inorganique et l'on rapporte ce volume poreux au volume poreux de départ selon la formule :

$$\frac{P_c - P_{me}}{P_c}$$

La porosité $P_c$ du matériau carboné nanoporeux est la somme du volume poreux des micropores $V_{mc}$ C et du volume poreux des mésopores $V_{ms}$ C.

Le volume poreux des micropores $V_{mc}$ C du matériau carboné nanoporeux est calculé en appliquant le modèle de Dubinin-Radushkevitch appliqué aux isothermes d'adsorption d'azote à 77,4K.

Le volume poreux des micropores $V_{mc}$ C du matériau carboné nanoporeux peut aussi être calculé sur base de la distribution des tailles de pores modélisée par 2D-NLDFT-HS (2D-non-linear DFT-HS) ou QSDFT (quench-state DFT) appliqué aux isothermes d'adsorption d'azote à 77,4K.

Le volume poreux des mésopores $V_{ms}$ C du matériau carboné nanoporeux est calculé sur base de la distribution des tailles de pores modélisée par 2D-NLDFT-HS (2D-non-linear DFT-HS) ou QSDFT (quench-state DFT) appliqué aux isothermes d'adsorption d'azote à 77,4K.

La porosité $P_{me}$ du matériau énergétique (volume poreux par unité de masse de carbone nanoporeux) est la somme du volume poreux des micropores $V_{mc}$ ME et du volume poreux des mésopores $V_{ms}$ ME (tous deux par unité de masse de carbone nanoporeux).

Le volume poreux des micropores $V_{mc}$ ME du matériau énergétique est calculé en appliquant le modèle de Dubinin-Radushkevitch appliqué aux isothermes d'adsorption d'azote à 77,4K.

Le volume poreux des micropores $V_{mc}$ ME du matériau carboné nanoporeux peut aussi être calculé sur base de la distribution des tailles de pores modélisée par 2D-NLDFT-HS (2D-non-linear DFT-HS) ou QSDFT (quench-state DFT) appliqué aux isothermes d'adsorption d'azote à 77,4K.

Le volume poreux des mésopores $V_{ms}$ ME du matériau énergétique est calculé sur base de la distribution des tailles de pores modélisée par 2D-NLDFT-HS (2D-non-linear DFT-HS) ou QSDFT (quench-state DFT) appliqué aux isothermes d'adsorption d'azote à 77,4K.

Selon une deuxième méthode, on mesure la porosité (volume poreux) du matériau énergétique ($P_{me}$) ainsi que la porosité du matériau énergétique ($P_{me}$ L) après une série de 3lessivages consécutifs dans l'eau ou dans un solvant dudit oxydant inorganique pendant 24 h à une température de 75 °C en enceinte fermée. Chaque lessivage est effectué avec un volume minimal de solvant égal à 1 dm$^3$ de solvant par g de matériau énergétique. Le nom de lessivage peut être augmenté si le solvant après lessivage contient encore des traces détectables de l'oxydant inorganique. Ces traces peuvent être quantifiées par une analyse élémentaire ou par une technique spectrométrique adaptée. Ensuite, on soustrait $P_{me}$ à $P_{me}$ L pour obtenir le volume poreux occupé par l'oxydant inorganique et l'on rapporte ce volume poreux au volume poreux de départ selon la formule :

$$\frac{P_{me}\,L - P_{me}}{P_{me}\,L}$$

La porosité $P_{me}$ est calculée comme dans la première méthode indiquée ci-dessus.

La porosité du matériau énergétique (volume poreux par unité de masse de carbone nanoporeux) après lessivage $P_{me}$ L est la somme du volume poreux des micropores $V_{mc}$ MEL et du volume poreux des mésopores $V_{ms}$ MEL (tous deux par unité de masse de carbone nanoporeux).

Le volume poreux des micropores $V_{mc}$ MEL du matériau énergétique lessivé est calculé en appliquant le modèle de Dubinin-Radushkevitch appliqué aux isothermes d'adsorption d'azote à 77,4K.

Le volume poreux des micropores $V_{mc}$ MEL du matériau carboné nanoporeux peut aussi être calculé sur base de la distribution des tailles de pores modélisée par 2D-NLDFT-HS (2D-non-linear DFT-HS) ou QSDFT (quench-state DFT) appliqué aux isothermes d'adsorption d'azote à 77,4K.

Le volume poreux des mésopores $V_{ms}$ MEL du matériau énergétique lessivé est calculé sur base de la distribution des tailles de pores modélisée par 2D-NLDFT-HS (2D-non-linear DFT-HS) ou QSDFT (quench-state DFT) appliqué aux isothermes d'adsorption d'azote à 77,4K.

Il a en effet été mis en évidence selon la présente invention par la température d'initiation que le matériau énergétique selon l'invention se décompose très vite et très violemment lorsqu'il est chauffé à pression atmosphérique. Le matériau énergétique détonne ou provoque une déflagration très rapide. La violence de la réaction est remarquable et proche de celle observée pour des matériaux extrêmement réactifs tels que les azotures de plomb. De plus, en comparaison avec des mélanges physiques contenant les mêmes proportions et les mêmes natures de matériau carboné nanoporeux et d'oxydant inorganique que le matériau énergétique selon la présente invention, la violence de la réaction du mélange physique est nettement plus faible car la réaction de décomposition de la matière est limitée à l'échelle micrométrique. Sans toutefois en avoir encore la certitude, on pense que ceci est dû au fait que la réactivité est élevée dans les petits pores inférieurs à 1 nm. Lorsque la décomposition se produit dans ces petits pores, la chaleur est transférée à la matière entourant les petits pores et initie la réaction de décomposition dans les pores de taille plus grande. En effet, l'échelle combustible/oxydant est plus petite de trois ordres de grandeur dans le matériau énergétique selon l'invention par rapport au mélange physique susdit (notamment < 1 nm en comparaison de 1 à 100 $\mu$m). On pense en effet que c'est cette échelle nanométrique, comparable à celle des molécules énergétiques, qui confère la réactivité observée.

Lors de sa combustion, le matériau énergétique composite, de par sa nature carbonée, va produire des produits gazeux qui restent à l'état gazeux, ce qui lui permet d'être utilisé dans les différentes classes de matériaux énergétiques comme les explosifs brisants, les poudres propulsives et les compositions pyrotechniques. De plus, la structure du matériau carboné nanoporeux qui présente de fortes liaisons carbone - carbone permet de conférer d'excellentes propriétés mécaniques, une bonne sensibilité à l'impact qui est d'au moins 2 J et une bonne stabilité thermique au matériau énergétique composite dont le caractère explosif est contrôlé renforçant la sécurité des utilisateurs et manipulateurs sans pour cela nuire aux performances énergétiques du matériaux composite selon l'invention.

Il faut savoir que la sensibilité à l'impact minimale requise pour être transportée est de 2 J (Orange Book UN).

De préférence, l'énergie de décomposition du matériau énergétique composite selon la présente invention est d'au moins 2000 J/g. L'énergie de décomposition au sens de la présente invention est l'intégrale du pic de décomposition sur un thermogramme obtenu par calorimétrie différentielle à balayage effectuée dans un creuset fermé. L'énergie de décomposition du matériau énergétique composite d'au moins 2000 J/g, les performances énergétiques sont sensiblement meilleures que les performances énergétiques des matériaux énergétiques composites existants.

Contrairement au silicium nanoporeux synthétisé sous forme de couches minces de quelques micromètres, le carbone nanoporeux est un matériau polyvalent tridimensionnel qui a été utilisé comme milieu de séparation depuis très longtemps. Ce matériau a été étudié et décrit largement dans la littérature.

Le carbone nanoporeux est produit de nos jours à l'échelle industrielle sous forme de poudre, grains ou de monolithes. En outre, il favorise la stabilité thermique des compositions énergétiques et leur sensibilité, comme indiqué ci-dessus. Le carbone nanoporeux présente des propriétés de texture et une chimie de surface qui peuvent être aisément modifiées au besoin et de manière contrôlée permettant ainsi l'obtention de nanomatériaux énergétiques relativement insensibles mais présentant des performances élevées en tant qu'explosif brisant ou poudre propulsive.

Les matériaux carbonés nanoporeux sont, en effet, caractérisés par un réseau nanoporeux en trois dimensions qui permet de combiner des propriétés de résistance mécanique à la présence d'un grand volume de micropores et mésopores dans le matériau carboné nanoporeux. Les propriétés mécaniques sont le résultat des liaisons carbone-carbone qui confèrent une résistance élevée du matériau. De plus, la surface des matériaux carbonés nanoporeux est stable, elle ne s'oxyde pas. De ce fait, il est capable de jouer pleinement son rôle de carburant, à l'inverse du silicium ou de l'aluminium par exemple, dont la surface est oxydée au contact de l'air et sur lesquels une couche d'oxyde natif se forme.

Le matériau énergétique composite selon la présente invention présente donc des propriétés mécaniques de résistance élevée tout en disposant d'une quantité importante d'oxydant majoritairement présente dans le grand volume de micropores et mésopores, conférant d'une part la performance au matériau énergétique, mais aussi la polyvalence, tout en assurant d'autre part la sécurité requise.

Avantageusement, le matériau énergétique composite suivant la présente invention présente une masse volumique apparente supérieure ou égale à 1,0 g/cm$^3$, de préférence supérieure ou égale à 1,25 g/cm$^3$, plus préférentiellement supérieure à 1,35 g/cm$^3$ et encore plus préférentiellement supérieure à 1,5 g/cm$^3$. Une masse volumique apparente élevée est liée à de meilleures performances dans les applications comme les poudres propulsives, les explosifs brisants. Une masse volumique apparente élevée permet d'augmenter la densité énergétique du matériau énergétique composite.

Dans une forme de réalisation avantageuse, le matériau énergétique composite présente un volume microporeux de pores ayant un diamètre inférieur à 2 nm compris entre 0,01 cm$^3$/g et 1,0 cm$^3$/g, calculé en appliquant le modèle de Dubinin-Radushkevitch appliqué aux isothermes d'adsorption d'azote à 77,4K.

De manière aussi avantageuse, le matériau énergétique composite selon l'invention présente un volume mésoporeux de pores ayant un diamètre compris entre 2 nm et 50 nm compris entre 0,05 cm$^3$/g et 3,0 cm$^3$/g, calculé sur base de la distribution des tailles de pores modélisée par 2D-NLDFT-HS (2D non-linear DFT HS) ou QSDFT (quench-state DFT) appliqué aux isothermes d'adsorption d'azote à 77,4K

Dans une forme de réalisation particulière, le matériau énergétique composite suivant l'invention comprend un matériau carboné nanoporeux qui est granulaire et qui présente un $D_{90}$ supérieur ou égal à 160 microns et un $D_{10}$ supérieur ou égal à 900 microns.

Avantageusement, le matériau énergétique composite suivant l'invention est sous forme de poudre. De manière encore plus avantageuse, la taille des particules de la poudre est comprise entre 25 $\mu$m et 50 $\mu$m.

Dans un autre mode de réalisation le matériau énergétique composite suivant l'invention est sous forme de monolithe. Il est intéressant de pouvoir utiliser le matériau énergétique composite selon l'invention sous différentes formes. En effet, cela permet de modifier la texture ou la chimie de surface dudit matériau énergétique composite en fonction du but recherché.

Avantageusement, le matériau énergétique composite selon l'invention comprend l'oxydant inorganique choisi dans le groupe des sels de formule générale $X_aZ_bO_c$ où a et b sont des nombres entiers compris entre 0 et 5, et où c représente un nombre entier compris entre 1 et 8, avec X qui représente un contre-anion choisi parmi Na, K, NH$_4$, Li, H, Ca, Mg, Al ou Fe, ainsi que leur combinaisons, avec Z qui représente Mn, Cl, N, S, I, P et O qui représente l'oxygène.

D'autres formes de réalisation du matériau énergétique composite suivant l'invention sont indiquées dans les revendications annexées.

L'invention a aussi pour objet une formulation énergétique qui comprend le matériau énergétique composite suivant la présente invention.

Dans un autre mode de réalisation, la formulation énergétique comprend en outre au moins un additif conventionnel tel qu'un plastifiant, énergétique ou non, un matériau de mise en forme, un stabilisant, un oxydant, identique ou différent, un anti-lueur ou du graphite.

D'autres formes de réalisation de la formulation énergétique suivant l'invention sont indiquées dans les revendications annexées.

L'invention a encore pour objet l'utilisation du matériau énergétique composite suivant la présente invention pour la fabrication d'une formulation énergétique.

D'autres formes d'utilisation du matériau énergétique composite selon la présente invention sont indiquées dans les revendications annexées.

L'invention a aussi pour objet un procédé de production d'un matériau énergétique composite.

Des procédés de production de matériaux énergétiques composites sont connus. Un de ces procédés est indiqué dans la partie traitant des technologies existantes dans le document « A decade of porous silicon as nano-explosive material», Monuko du Plessis, pages 1-17.

Il y est indiqué qu'un matériau énergétique composite à partir de silicium nanoporeux en tranches a pu être réalisé en déposant au goutte-à-goutte un oxydant à la surface du silicium nanoporeux. La solution contenant l'oxydant est absorbée dans les pores par capillarité. Lorsque les deux premières gouttes versées ont séché (semblent visuellement séchées), un dépôt de deux nouvelles gouttes est réalisé. Toutefois, un tel procédé nécessite un temps d'attente entre chaque dépôt de deux gouttes et ne permet pas une imprégnation totale de la tranche de silicium poreux mais seulement de la surface exposée.

Un autre procédé consiste à déposer sur la surface de la tranche de silicium poreux un oxydant de manière répétée.

Malheureusement, dans les deux procédés indiqués ci-dessus, la manière de produire le matériau énergétique reste assez laborieuse et peu envisageable à l'échelle industrielle. Les contraintes sont très importantes sans aucune garantie de parvenir à un produit relativement stable, mais performant.

La présente invention concerne plus particulièrement un procédé de production d'un matériau énergétique composite comprenant les étapes suivantes :

a) Immersion dudit au moins matériau nanoporeux par ledit au moins un oxydant présent dans un fluide;
b) Imprégnation dudit au moins un matériau nanoporeux par ledit au moins un oxydant présent dans un fluide;
c) Obtention d'un matériau énergétique composite.

Un tel procédé est également décrit dans le document « A decade of porous silicon as nano-explosive material », Monuko du Plessis, pages 1-1 selon lequel un silicium nanoporeux est immergé avec un oxydant pour produire un matériau énergétique composite.

Bien que ce procédé décrive une production simplifiée par une immersion totale de la tranche de silicium nanoporeux pour une imprégnation par l'oxydant plus importante que celle réalisée dans les procédés précédemment décrits, ladite imprégnation ne survient en réalité que dans les pores présents à la surface ou proches de la surface du silicium poreux.

Malheureusement, le matériau nanoporeux utilisé est du silicium nanoporeux dont la préparation est délicate et coûteuse. Elle dépend d'une technique d'attaque peu contrôlable qui peut rapidement mener à une instabilité du silicium.

Par conséquent, le matériau énergétique composite obtenu par ce procédé antérieur est difficilement manipulable et le procédé de fabrication est relativement contraignant à mettre en oeuvre, entre autres, de par l'affinité du le silicium nanoporeux pour les composés organiques et par l'hydrophobicité de sa surface, nécessitant des étapes de production relativement agressives.

Le fluide utilisé est toujours une solution et comme la surface du silicium poreux est hydrophobe, l'eau n'est pas utilisée comme solvant dans la solution mais au contraire, le solvant de la solution d'immersion est de l'éthanol, du méthanol, de l'acétone ou du $CS_2$. Ces composés sont plus coûteux, volatiles et parfois toxiques. La plupart des sels étant plus solubles dans l'eau que dans des substances telles que l'éthanol, le méthanol, l'acétone, ou le CS2, cela signifie que lorsqu'ils sont utilisés avec lesdites substances, la quantité de l'oxydant dissout et donc accessible pour l'imprégnation est plus faible que si l'oxydant est mis en solution avec de l'eau. De plus, cela limite le choix des oxydants qui peuvent être utilisés.

En outre, selon ce document antérieur, l'imprégnation est effectuée dans des conditions strictes. Elle est effectuée sous vide rendant les interactions plus compliquées, ainsi que la production à l'échelle industrielle.

De plus, selon ce document, lorsque le matériau énergétique est obtenu, une partie de l'oxydant s'exsude des pores du silicium nanoporeux. Cela confirme l'instabilité du silicium nanoporeux qui est connu pour avoir une très forte affinité pour l'hydrogène avec lequel les atomes de silicium se lient. Le document EP 2 138 180 décrit également une imprégnation d'un silicium nanoporeux avec un oxydant pour en faire des nanobombes thérapeutiques.

On connait également du document US 2003/097953 des procédés de production de matériaux énergétiques pour la fabrication d'airbags à base d'oxydant inorganique et de charbon actif et d'éthanol en présence d'un capteur de radicaux à base de chlore. L'éthanol est utilisé comme agent dispersant des particules pulvérulentes de charbon actif, d'oxydant inorganique et du capteur de radicaux chlorés pour la fabrication d'un mélange homogène sans imprégnation.

On connaît également du document GB 500 934 un procédé de production d'explosifs utilisant un transporteur poreux tel que des esters de cellulose, des celluloses régénérées, ou des éthers, et des explosifs liquides à base de nitro-glycérine qui sont mis en compétition avec un oxydant inorganique pour permettre son absorption.

Enfin, on connait du document US 6 666 935 de matériau énergétique sous forme de xérogels.

La présente invention procure un procédé de production d'un matériau énergétique composite comprenant les étapes précédentes caractérisé en ce que ledit matériau nanoporeux est un matériau carboné nanoporeux; et en ce que ladite étape d'imprégnation comprend une adsorption dudit au moins un oxydant dans les micropores, mésopores et macropores formant un noyau à température comprise entre 0 et 50 °C, de préférence entre 15 et 30 °C, de préférence entre 18 et 28°C, plus préférentiellement entre 20 et 26 °C, ladite adsorption étant suivie d'un remplissage des micropores, mésopores et macropores libres par ledit oxydant.

Dans le procédé selon la présente invention, la production du matériau énergétique est simple de mise en oeuvre, ne requérant pas d'étape de mise sous vide ou d'abaissement drastique de la température. En effet, le matériau carboné nanoporeux présente suffisamment d'affinité pour l'oxydant par rapport aux molécules présentes dans l'air ambiant pour ne pas nécessiter des étapes contraignantes de compétition avec l'oxydant. En outre, le matériau carboné nanoporeux présente une structure de pores tridimensionnelle qui, même à température ambiante apporte de la stabilité mécanique au matériau énergétique ainsi produit.

L'étape d'imprégnation du procédé selon la présente invention est réalisée préférentiellement en plusieurs étapes. Une première imprégnation de l'oxydant inorganique est réalisée dans les nanopores du matériau carboné nanoporeux permettant alors l'obtention d'une phase solide dans les plus petits pores ce qui va former le noyau. Une deuxième imprégnation ou une série d'imprégnation(s) subséquente pendant de 1 heure à 10 jours de l'oxydant inorganique est ensuite réalisée permettant l'enrichissement du matériau énergétique en oxydant inorganique. La ou les imprégnations peuvent être suivies d'un séchage. La solution d'oxydant inorganique utilisée est de préférence une solution aqueuse saturée, préalablement filtrée.

Au vu de ces éléments, il a été mis en évidence de manière surprenante qu'il était possible d'utiliser un matériau carboné nanoporeux largement disponible dans le commerce et simple de fabrication qui est aisément manipulable sans requérir de conditions contraignantes pour la production de matériau énergétique apportant la carburant nécessaire au matériau énergétique et capable de contenir par adsorption suffisamment d'oxydant pour lui conférer la performance en tant que matériau énergétique, la polyvalence (le matériau énergétique présente des performances explosives, mais aussi des performances de propulsion), mais aussi la sécurité et une simplicité de production.

De plus, bien que le matériau carboné nanoporeux soit hydrophobe comme le silicium nanoporeux, il est d'autant plus surprenant, lorsque le fluide est un fluide polaire, hydrophile, comme un solvant à base d'eau, d'obtenir une adsorption de l'oxydant dans les micropores, mésopores et macropores, c'est-à-dire les nanopores même présents en profondeur, dudit matériau carboné nanoporeux. Avantageusement, le matériau carboné nanoporeux est un matériau carboné nanoporeux sous forme de particules carbonées nanoporeuses.

Avantageusement, le matériau énergétique selon la présente invention contient un rapport entre la fraction atomique d'oxygène libre de l'oxydant par rapport au carbone contenu dans le matériau carboné nanoporeux compris entre 0,5 et 2,5, de préférence comprise entre 1 et 2,2 et plus préférentiellement autour de 2.

Dans un mode de réalisation préféré, la teneur minimale de carbone dudit matériau carboné nanoporeux compris dans le matériau énergétique composite selon la présente invention, est supérieure à 70% en poids de carbone, de préférence supérieure à 80% en poids de carbone, plus particulièrement supérieure à 90% en poids de carbone par rapport au poids total dudit matériau carboné nanoporeux.

Avantageusement, le fluide dans le procédé selon la présente invention est une phase liquide comprenant ledit oxydant inorganique dans un solvant, par exemple un solvant polaire tel que de l'eau, le diméthylsulfoxyde (DMSO) ou l'acétone.

Avantageusement, ladite phase liquide du fluide dans le procédé selon la présente invention, est une solution ou suspension colloïdale saturée dudit oxydant inorganique.

De manière tout aussi avantageuse, le remplissage des micropores, mésopores et macropores libres dans le procédé selon la présente invention est effectué par une évaporation, une filtration, une vaporisation, une extraction, une lyophilisation, une cryodessiccation ou leur combinaison.

De préférence, avant que le matériau énergétique composite soit obtenu, une étape de rinçage par un solvant de rinçage et une élimination du solvant de rinçage, éventuellement chargé en oxydant inorganique en excès par évaporation, filtration, vaporisation, extraction, lyophilisation, cryodessiccation, séchage ou leur combinaison.

Dans une autre forme de réalisation tout aussi avantageuse, le procédé selon la présente invention, le matériau carboné nanoporeux est immergé dans ledit fluide sous agitation.

Avantageusement, ladite période de temps prédéterminée du procédé selon la présente invention est comprise entre 10 minutes et 10 jours, de préférence entre 1 heure et 8 jours, plus particulièrement entre 4 et 7 jours, encore plus particulièrement entre 6 heures et 6 jours.

Avantageusement, ledit oxydant inorganique dans le procédé selon la présente invention est choisi dans le groupe des sels de formule générale $X_aZ_bO_c$ où a et b sont des nombres entiers compris entre 0 et 5, et où c représente un nombre entier compris entre 1 et 8, avec X qui représente un contre-anion choisi parmi Na, K, $NH_4$, Li, H, Ca, Mg, Al ou Fe ainsi que leur combinaisons, avec Z qui représente Mn, Cl, N, S, P, I et O qui représente l'oxygène.

De préférence, le procédé selon la présente invention comprend ledit matériau carboné nanoporeux présentant un volume microporeux de pores ayant un diamètre inférieur à 2 nm compris entre 0,1 $cm^3$/g et 1,0 $cm^3$/g, calculé en appliquant le modèle de Dubinin-Radushkevitch appliqué aux isothermes d'adsorption d'azote à 77,4K.

Avantageusement, le procédé selon la présente invention comprend lesdites particules carbonées nanoporeuses présentant un volume mésoporeux de pores ayant un diamètre compris entre 2 nm et 50 nm compris entre 0,05 $cm^3$/g et 3,0 $cm^3$/g, calculé sur base de la distribution des tailles de pores modélisée par 2D-NLDFT-HS (non-linear DFT) ou QSDFT (quench-state DFT) appliqué aux isothermes d'adsorption d'azote à 77,4K.

Dans un mode de réalisation préféré, le procédé selon la présente invention comprend ledit matériau carboné nanoporeux sous forme granulaire présentant un $D_{90}$ supérieur ou égal à 160 microns et un $D_{10}$ supérieur ou égal à 900 microns.

La notation Dx représente un diamètre, exprimé en $\mu$m, par rapport auquel X % des particules ou grains mesurées sont plus petites.

Dans une forme de réalisation préférée, le procédé selon la présente invention, comprend ledit matériau carboné nanoporeux qui est sous forme de poudre.

Dans une forme de réalisation préférée, le procédé selon la présente invention, comprend ledit matériau carboné nanoporeux qui est sous forme de monolithe.

Avantageusement, le procédé selon la présente invention comprend ledit matériau énergétique composite récupéré présentant une masse volumique apparente supérieure ou égale à 1,0 g/cm$^3$, de préférence supérieure ou égale à 1,25 g/cm$^3$, plus préférentiellement supérieure à 1,35 g/cm$^3$ et encore plus préférentiellement supérieure à 1,5 g/cm$^3$.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins et aux exemples.

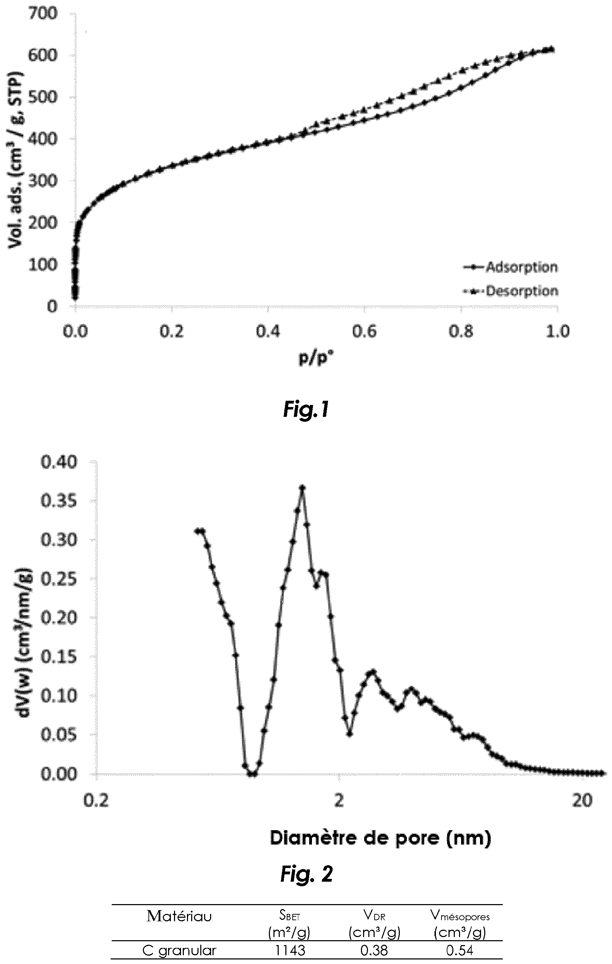

Dans les dessins, la figure 1 est un graphique illustrant les isothermes d'adsorption d'azote (volume microporeux poreux adsorbé par rapport à la pression relative) du matériau carboné nanoporeux C-Granular (GAC), disponible auprès de la société Cabot Norit calculés par les isothermes d'adsorption d'azote à haute résolution à 77,4 K.

La figure 2 est un graphique illustrant la distribution de la taille des pores (distribution du volume des micropores par rapport à la largeur des pores) du matériau carboné nanoporeux C-Granular (GAC), disponible auprès de la société Cabot Norit calculée à partir des isothermes d'adsorption d'azote haute résolution à 77,4 K.

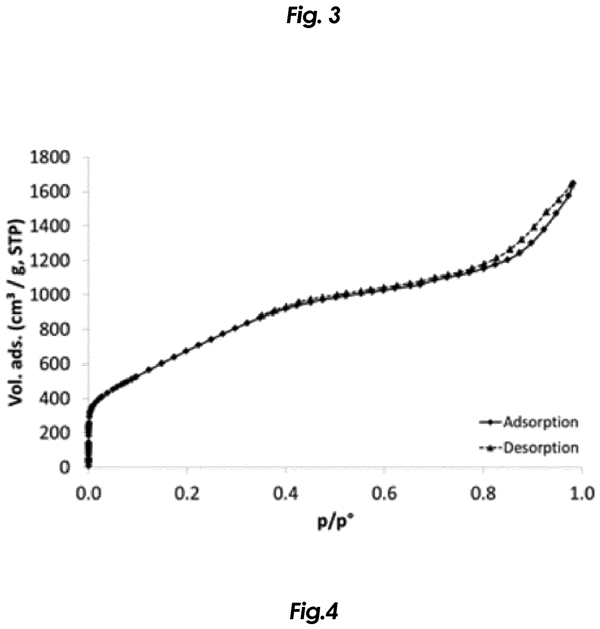

La figure 3 est un tableau qui reprend la surface spécifique BET, le volume microporeux et le volume mésoporeux du matériau carboné nanoporeux C-Granular (GAC), disponible auprès de la société Cabot Norit calculés à partir des isothermes d'adsorption d'azote haute résolution à 77,4 K.

La figure 4 est un graphique illustrant les isothermes d'adsorption d'azote (volume microporeux poreux adsorbé par rapport à la pression relative) du matériau carboné nanoporeux F5001 disponible auprès de la société Blücher calculés à partir des isothermes d'adsorption d'azote à haute résolution à 77,4 K.

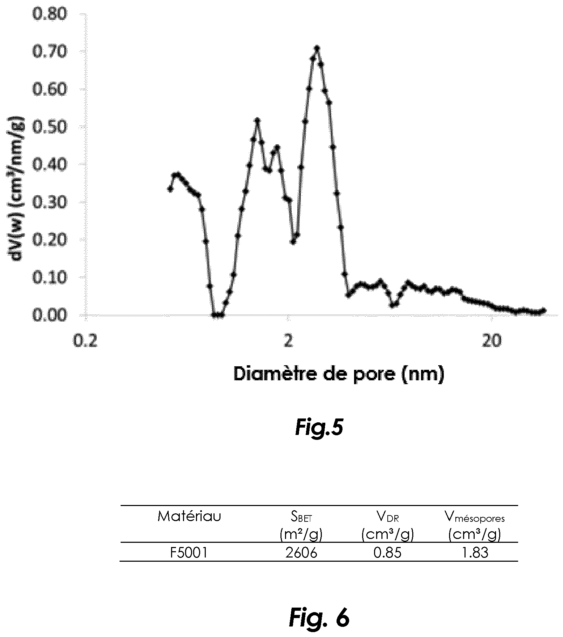

La figure 5 est un graphique illustrant la distribution de la taille des pores (distribution du volume des micropores par rapport à la largeur des pores) du matériau carboné nanoporeux F5001 disponible auprès de la société Blücher, calculée à partir des isothermes d'adsorption d'azote haute résolution à 77,4 K.

La figure 6 est un tableau qui reprend la surface spécifique BET, le volume microporeux et le volume mésoporeux du matériau carboné nanoporeux F5001 disponible auprès de la société Blücher calculés à partir des isothermes d'adsorption d'azote haute résolution.

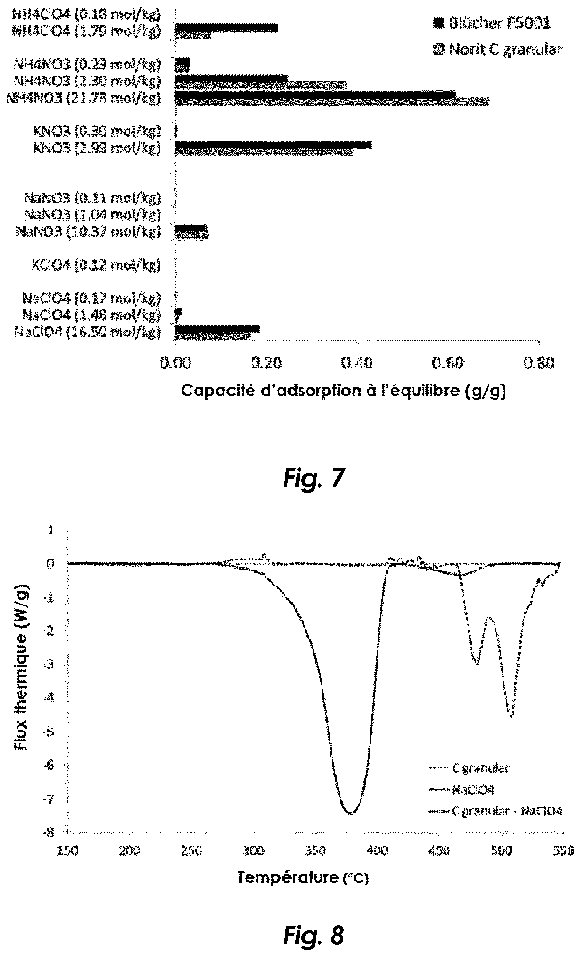

La figure 7 est un graphique de la capacité d'adsorption à l'équilibre de différents oxydants (NH$_4$ClO$_4$,

NH$_4$NO$_3$, KNO$_3$, NaNOs, KClO$_4$, NaClO$_4$) par le matériau carboné nanoporeux C-Granular (GAC), disponible auprès de la société Cabot Norit et le matériau carboné nanoporeux F5001 disponible auprès de la société Blücher.

La figure 8 est un graphique qui illustre les courbes DSC (flux de chaleur par rapport à la température) du matériau carboné nanoporeux C-Granular (GAC) disponible auprès de la société Cabot Norit, de l'oxydant NaClO$_4$ et d'un matériau énergétique selon l'invention (matériau carboné nanoporeux C-Granular (GAC) disponible auprès de la société Cabot Norit chargé de l'oxydant NaClO$_4$).

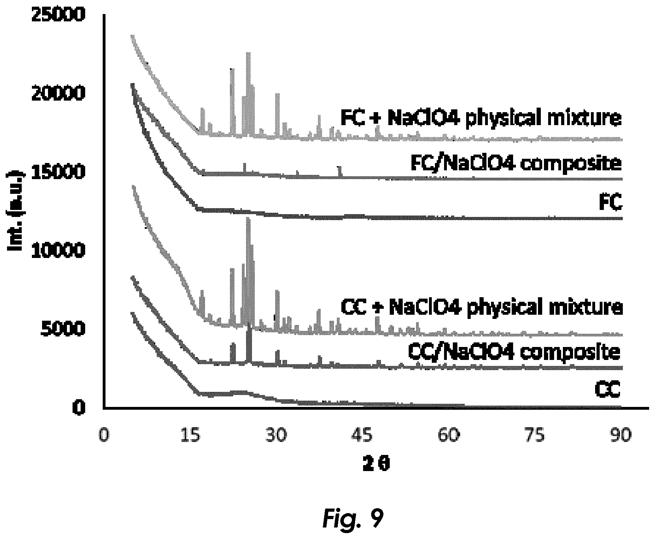

La figure 9 est le résultat d'une analyse DRX (diffraction rayon-X) du matériau carboné nanoporeux C-Granular (CC) et du matériau F5001 (FC) en tant que référence, des matériaux selon les exemples 9, 10 et les exemples comparatifs 1 et 2.

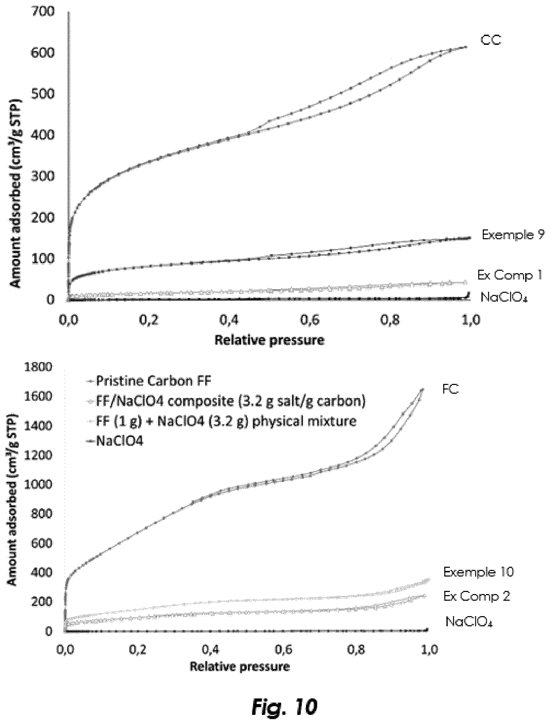

La figure 10 illustre les isothermes d'adsorption d'azote (volume microporeux poreux adsorbé par rapport à la pression relative) du matériau carboné nanoporeux C-Granular (CC) et du matériau F5001 (FC) en tant que référence, des matériaux selon les exemples 9, 10 et les exemples comparatifs 1 et 2 calculés par les isothermes d'adsorption d'azote à haute résolution à 77,4 K.

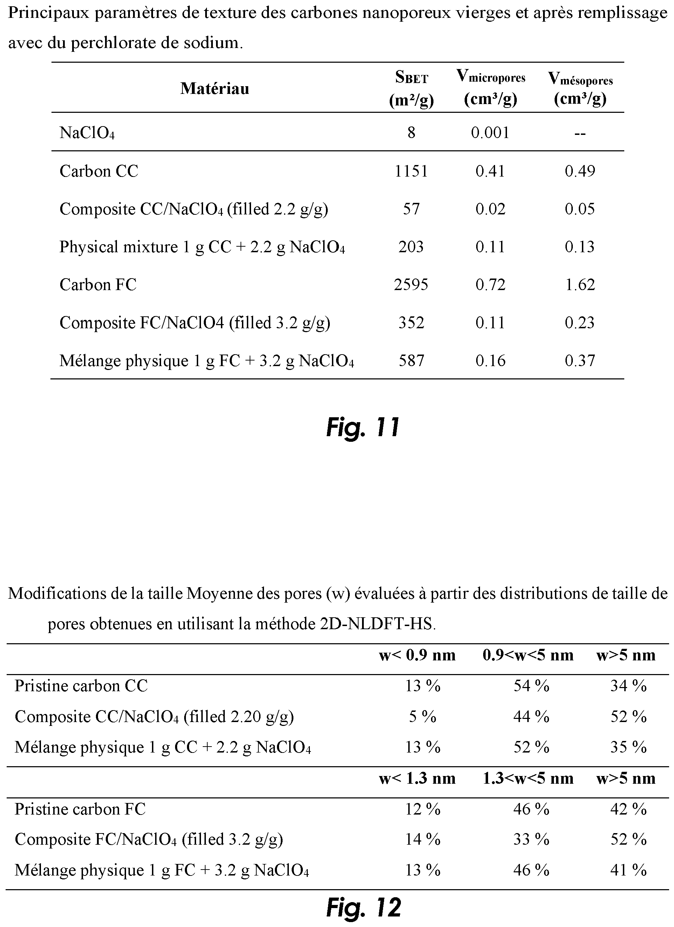

La figure 11 est un tableau qui reprend la surface spécifique BET, le volume microporeux et le volume mésoporeux du matériau carboné nanoporeux C-Granular (CC) et du matériau F5001 (FC) en tant que référence, des matériaux selon les exemples 9, 10 et les exemples comparatifs 1 et 2.

La figure 12 est un tableau reprenant la modification dans la taille moyenne des pores (W) évaluée à partir des distributions de tailles de pores obtenues en utilisant le modèle 2D-NLDFT-HS du matériau carboné nanoporeux C-Granular (CC) et du matériau F5001 (FC) en tant que référence, des matériaux selon les exemples 9, 10 et les exemples comparatifs 1 et 2.

**Exemples.-**

**Exemple 1** : Caractérisation de la structure des pores du matériau carboné nanoporeux C-Granular (GAC) disponible auprès de la société Cabot Norit, nommé ci-après C-Granular.

On a choisi et étudié un matériau carboné nanoporeux commercial, le C-Granular qui présente un grand volume de micropores et de mésopores. On a d'abord broyé le C-Granular et on l'a ensuite tamisé pour reprendre uniquement des particules dont la taille de particules est comprise entre 500 et 630 $\mu$m.

On a caractérisé la structure des pores par les isothermes d'adsorption de l'azote haute résolution à 77,4 K pour le C-Granular. On a préalablement dégazé le matériau carboné nanoporeux C-Granular à 120 °C pendant 17 heures sous vide à une pression de $10^{-5}$-$10^{-6}$ Torr. Tout d'abord, comme on peut le voir à la figure 1, on a mesuré l'adsorption de l'azote à la surface du C-Granular jusqu'à ce qu'un équilibre se forme entre la pression de l'azote et la quantité de l'azote absorbée par le C-Granular.

On a ensuite mesuré la distribution des pores. Comme illustré à la figure 2, la distribution des pores se situe entre 0,5 et 35 avec très peu de pores avec un diamètre supérieur à 20 nm.

On a mesuré les propriétés de textures principales et de chimie surface du C-Granular qui sont illustrées à la figure 3 : la surface spécifique ($S_{BET}$) qui est de 1143 $m^2/g$, le volume microporeux ($V_{DR}$) qui est de 0,38 $cm^3/g$ et le volume mésoporeux qui est de 0,54 $cm^3/g$.

**Exemple 2 :** Caractérisation de la structure des pores du matériau carboné nanoporeux F5001 disponible auprès de la société Blücher, nommé ci-après F5001.

On a choisi et sélectionné un matériau carboné nanoporeux commercial, le F5001 qui présente un grand volume de micropores et de mésopores. Le F5001 a été utilisé directement tel que fourni.

On a caractérisé la structure des pores par les isothermes d'adsorption de l'azote à haute résolution à 77,4 K pour le F5001. On a préalablement dégazé le matériau carboné nanoporeux F5001 à 120 °C pendant 17 heures sous vide à une pression de $10^{-5}$ - $10^{-6}$ Torr. Tout d'abord, comme on peut le voir à la figure 4, on a mesuré l'adsorption de l'azote à la surface du matériau carboné nanoporeux jusqu'à ce qu'un équilibre se forme entre la pression de l'azote et la quantité de l'azote absorbée par le F5001.

On a ensuite mesuré la distribution des pores. Comme illustré à la figure 5, la distribution des pores se situe entre 0,5 et 0,35 avec toujours une présence de pores avec un diamètre supérieur à 20 nm.

On a ensuite mesuré les propriétés de textures principales et de chimie de surface du F5001 qui sont illustrées à la figure 6 : la surface spécifique ($S_{BET}$) qui est de 2606 $m^2/g$, le volume microporeux ($V_{DR}$) qui est de 0,85 $cm^3/g$ et le volume mésoporeux qui est de 1,83 $cm^3/g$.

**Exemple 3 :** Capacités d'adsorption à l'équilibre en phase liquide du C-Granular ou du F5001 par du $NH_4ClO_4$.

Tout d'abord, on a dégazé deux échantillons de C-Granular et de F5001 à 120 °C pendant 17 heures sous vide ($10^{-2}$ Torr). On a ensuite préparé deux solutions aqueuses comprenant du $NH_4ClO_4$. La première solution aqueuse est une solution saturée en $NH_4ClO_4$ à 20°C, la deuxième solution est une dilution 1 :10 de la solution saturée en $NH_4ClO_4$ à 20 °C.

- C-Granular

On a immergé un premier échantillon de 250 ± 10 mg de C-Granular dans 20 ± 1 ml de ladite solution saturée en $NH_4ClO_4$ pour permettre la stabilisation sous agitation pendant 6 jours à température ambiante (20 ±1 °C). On a réalisé le même procédé d'immersion avec 250 ± 10 mg de C-Granular une deuxième fois avec ladite dilution 1 :10 de la solution saturée en $NH_4ClO_4$.

Comme illustré à la figure 7, la molalité de ladite solution saturée en $NH_4ClO_4$ est de 1,79 mol/kg, la molalité de ladite dilution 1 :10 de la solution saturée en $NH_4ClO_4$ est de 0,18 mol/kg.

On a mesuré les capacités d'adsorption à l'équilibre en comparant la concentration en $NH_4ClO_4$ de la solution aqueuse avant et après le contact avec le C-Granular. On a réalisé cette expérience en doublon. On a mesuré les concentrations en $NH_4ClO_4$ de la solution aqueuse avant et après le contact avec le C-Granular de manière gravimétrique, en prélevant un échantillon de solution, en évaporant précautionneusement l'eau contenu dans cet échantillon jusqu'à atteindre une masse constante et en pesant la masse de sel résiduel. On a alors calculé la fraction massique de sel dans l'échantillon prélevé.

- F5001

On a immergé un premier échantillon de 250 ± 10 mg de F5001 dans 20 ± 1 ml de ladite solution saturée en $NH_4ClO_4$ pour permettre la stabilisation sous agitation pendant 6 jours à température ambiante (20 ±1 °C). On a réalisé le même procédé d'immersion avec 250 ± 10 mg de F5001 une deuxième fois avec ladite dilution 1 :10 de la solution saturée en $NH_4ClO_4$.

Comme illustré à la figure 7, la molalité de ladite solution saturée en $NH_4ClO_4$ est de 1,79 mol/kg, la molalité de ladite dilution 1 :10 de la solution saturée en $NH_4ClO_4$ est de 0,18 mol/kg.

On a ensuite mesuré les capacités d'adsorption à l'équilibre en comparant la concentration en $NH_4ClO_4$ de la solution aqueuse avant et après le contact avec le F5001. Cette expérience a été réalisée en doublon. On a mesuré les concentrations en $NH_4ClO_4$ de la solution aqueuse avant et après le contact avec le C-Granular de manière gravimétrique, en prélevant un échantillon de solution, en évaporant précautionneusement l'eau contenu dans cet échantillon jusqu'à atteindre une masse constante et en pesant la masse de sel résiduel. On a alors calculé la fraction massique de sel dans l'échantillon prélevé.

Les résultats concernant le $NH_4ClO_4$ de la figure 7 montrent que les deux matériaux carbonés nanoporeux C-Granular et F5001, qui ont des propriétés de texture et une chimie de surface différentes, présentent des capacités d'adsorption à l'équilibre différentes avec une adsorption significative pour le F5001 et ne dépendent pas des propriétés de texture et de la chimie de surface.

**Exemple 4 :** Capacités d'adsorption à l'équilibre en phase liquide du C-Granular ou du F5001 par du NH$_4$NO$_3$.

Tout d'abord, on a dégazé trois échantillons de C-Granular et de F5001 à 120 °C pendant 17 heures sous vide (10$^{-2}$ Torr). Ensuite, on a préparé trois solutions aqueuses comprenant du NH$_4$NO$_3$. La première solution aqueuse est une solution saturée en NH$_4$NO$_3$ à 20 °C, la deuxième solution est une dilution 1 :10 de la solution saturée en NH$_4$NO$_3$ à 20 °C et la troisième solution est une dilution 1 :100 de la solution saturée en NH$_4$NO$_3$ à 20 °C.

- C-Granular

Un premier échantillon de 250 ± 10 mg de C-Granular a été immergé dans 20 ± 1 ml de ladite solution saturée en NH$_4$NO$_3$ pour permettre la stabilisation sous agitation pendant 6 jours à température ambiante (20 ± 1 °C). On a réalisé le même procédé d'immersion avec 250 ± 10 mg de C-Granular une deuxième fois avec ladite dilution 1 :10 de la solution saturée en NH$_4$NO$_3$ et finalement une troisième fois avec ladite dilution 1 :100 de la solution saturée en NH$_4$NO$_3$.

Comme illustré à la figure 7, la molalité de ladite solution saturée en NH$_4$NO$_3$ est de 21,73 mol/kg, la molalité de ladite dilution 1 :10 de la solution saturée en NH$_4$NO$_3$ est de 2,30 mol/kg et la molalité de ladite dilution 1 :100 de la solution saturée en NH$_4$NO$_3$ est de 0,23 mol/kg.

On a ensuite mesuré les capacités d'adsorption à l'équilibre en comparant la concentration en NH$_4$NO$_3$ de la solution aqueuse avant et après le contact avec le C-Granular. Cette expérience a été réalisée en doublon. On a mesuré les concentrations en NH$_4$NO$_3$ de la solution aqueuse avant et après le contact avec le C-Granular de manière gravimétrique, en prélevant un échantillon de solution, en évaporant précautionneusement l'eau contenu dans cet échantillon jusqu'à atteindre une masse constante et en pesant la masse de sel résiduel. On a alors calculé la fraction massique de sel dans l'échantillon prélevé.

- F5001

On a immergé un premier échantillon de 250 ± 10 mg de F5001 dans 20 ± 1 ml de ladite solution saturée en NH$_4$NO$_3$ pour permettre la stabilisation sous agitation pendant 6 jours à température ambiante (20 ± 1 °C). On a réalisé le même procédé d'immersion avec 250 ± 10 mg de F5001 une deuxième fois avec ladite dilution 1 :10 de la solution saturée en NH$_4$NO$_3$ et finalement une troisième fois avec ladite dilution 1 :100 de la solution saturée en NH$_4$NO$_3$.

Comme illustré à la figure 7, la molalité de ladite solution saturée en NH$_4$NO$_3$ est de 21,73 mol/kg, la molalité de ladite dilution 1 :10 de la solution saturée en NH$_4$NO$_3$ est de 2,30 mol/kg et la molalité de ladite dilution 1 :100 de la solution saturée en NH$_4$NO$_3$ est de 0,23 mol/kg.

On a ensuite mesuré les capacités d'adsorption à l'équilibre en comparant la concentration en NH$_4$NO$_3$ de la solution aqueuse avant et après le contact avec le F5001. Cette expérience a été réalisée en doublon. On a mesuré les concentrations en NH$_4$NO$_3$ de la solution aqueuse avant et après le contact avec le C-Granular de manière gravimétrique, en prélevant un échantillon de solution, en évaporant précautionneusement l'eau contenu dans cet échantillon jusqu'à atteindre une masse constante et en pesant la masse de sel résiduel. On a alors calculé la fraction massique de sel dans l'échantillon prélevé.

Les résultats concernant le NH$_4$NO$_3$ de la figure 7 montrent que les deux matériaux carbonés nanoporeux C-Granular et F5001, qui ont des propriétés de texture et une chimie de surface différentes, présentent des capacités d'adsorption à l'équilibre similaires avec une adsorption significative lorsque la solution aqueuse est saturée en NH$_4$NO$_3$ et lorsque la solution aqueuse saturée en NH$_4$NO$_3$ est diluée à 1 :10. Les résultats montrent que les capacités d'adsorption à l'équilibre ne dépendent pas des propriétés de texture et de la chimie de surface.

**Exemple 5** : Capacités d'adsorption à l'équilibre en phase liquide du C-Granular ou du F5001 par du KNO$_3$.

On a reproduit l'exemple 3 en remplaçant l'oxydant par du KNO$_3$.

Comme illustré à la figure 7, la molalité de ladite solution saturée en KNO$_3$ est de 2,90 mol/kg, la molalité de ladite dilution 1 :10 de la solution saturée en KNO$_3$ est de 0,30 mol/kg.

Les résultats concernant le KNO$_3$ de la figure 7 montrent que, bien que les deux matériaux carbonés nanoporeux C-Granular et F5001 ont des propriétés de texture et une chimie de surface différentes, leurs capacités d'adsorption à l'équilibre ont des valeurs très similaires et ne dépendent pas des propriétés de texture et de la chimie de surface. Les résultats montrent aussi qu'il y a une adsorption significative de KNO$_3$ par le C-Granular et le F5001 lorsque la solution aqueuse est saturée en KNO$_3$.

**Exemple 6 :** Capacités d'adsorption à l'équilibre en phase liquide du C-Granular ou du F5001 par du NaNOs.

On a reproduit l'exemple 4 en remplaçant l'oxydant par du NaNO$_3$.

Comme illustré à la figure 7, la molalité de ladite solution saturée en NaNOs est de 10,37 mol/kg, la molalité de ladite dilution 1 :10 de la solution saturée en NaNOs est de 1,04 mol/kg et la molalité de ladite dilution 1 :100 de la solution saturée en NaNOs est de 0,11 mol/kg.

Les résultats concernant le NaNOs de la figure 7 montrent que, bien que les deux matériaux carbonés nanoporeux C-Granular et F5001 ont des propriétés de texture et une chimie de surface différentes, leurs capacités d'adsorption à l'équilibre ont des valeurs très similaires et ne dépendent pas des propriétés de texture et de la chimie de surface. Les résultats montrent aussi qu'il y a une adsorption significative de NaNO$_3$par le C-Granular et le F5001 lorsque la solution aqueuse est saturée en NaNOs.

**Exemple 7 :** Capacités d'adsorption à l'équilibre en phase liquide du C-Granular ou du F5001 par du perchlorate de sodium (NaClO$_4$).

On a reproduit l'exemple 4 en remplaçant l'oxydant par du NaClO$_4$.

Comme illustré à la figure 7, la molalité de ladite solution saturée en NaClO$_4$ est de 16,50 mol/kg, la molalité de ladite dilution 1 :10 de la solution saturée en NaClO$_4$ est de 1,48 mol/kg et la molalité de ladite dilution 1 :100 de la solution saturée en NaClO$_4$ est de 0.17 mol/kg.

Les résultats concernant le NaClO$_4$ de la figure 7 montrent que, bien que les deux matériaux carbonés nanoporeux C-Granular et F5001 ont des propriétés de texture et une chimie de surface différentes, leurs capacités d'adsorption à l'équilibre ont des valeurs très similaires et ne dépendent pas des propriétés de texture et de la chimie de surface. Les résultats montrent aussi qu'il y a une adsorption significative de NaClO$_4$ par le C-Granular et le F5001lorsque la solution aqueuse est saturée en NaClO$_4$.

Il ressort de ces expériences que le NaClO$_4$ est un bon candidat oxydant par sa capacité d'adsorption élevée sur le C-Granular et sur le F5001, sa masse volumique élevée et sa balance en oxygène élevée (non montrées sur les figures).

**Exemple 8 :** Propriétés thermiques du matériau énergétique composite NaClO$_4$ - C-Granular .

On a mesuré les propriétés thermiques du NaClO$_4$, du C-Granular et du matériau énergétique composite (NaClO$_4$ - C-Granular) par les expériences DSC sur un instrument Q20 (Instruments TA). L'appareil a été calibré en utilisant le pic de fusion de l'indium. On a effectué les expériences à haute pression dans des creusets en acier inoxydable scellés avec une membrane plaquée or à une augmentation de température de 5 °C par minute.

La figure 8 montre une différence significative entre la température d'initiation de la décomposition du matériau énergétique composite qui est d'environ 320 °C et la température d'initiation de la décomposition de NaClO$_4$ = qui est de 470 °C, ce qui est 150 °C inférieur à la température d'initiation de la décomposition de NaClO$_4$ seul.

Exemple 9 :

On a reproduit le protocole des exemples précédents en utilisant comme oxydant inorganique du perchlorate de sodium sur le C-Granular et le F5001 comme matériau carboné nanoporeux.

Tout d'abord, on a dégazé deux échantillons de C-Granular et de F5001 à 120 °C pendant 17 heures sous vide (10$^{-2}$ Torr). On a ensuite préparé deux solutions aqueuses comprenant du NaClO$_4$. La première solution aqueuse est une solution saturée en NaClO$_4$ à 20 °C, la deuxième solution est une solution supersaturée en NaClO$_4$ à 20 °C obtenue en évaporant le solvant.

- C-Granular (CC)

On a immergé un premier échantillon de 250 ± 10 mg de C-Granular dans 20 ± 1 ml de ladite solution saturée en NaClO$_4$ (66% en poids) pour permettre la stabilisation sous agitation pendant 6 jours à température ambiante (20 ±1 °C). On a réalisé le même procédé d'immersion avec 250 ± 10 mg de C-Granular une deuxième fois avec ladite solution super saturée en NaClO$_4$.

- F5001(FC)

On a immergé un premier échantillon de 250 ± 10 mg de F5001 dans 20 ± 1 ml de ladite solution saturée en NaClO$_4$ (66% en poids) pour permettre la stabilisation sous agitation pendant 6 jours à température ambiante (20 ±1 °C). On a réalisé le même procédé d'immersion avec 250 ± 10 mg de F5001 une deuxième fois avec ladite solution supersaturée en NaClO$_4$.

On a obtenu une proportion d'oxydant inorganique de 2,2 g/g de carbone pour le matériau carboné nanoporeux C-Granular et 3,2 g/g de carbone pour le matériau carboné nanoporeux F5001.

On a comparé par RDX les échantillons de matériau carboné nanoporeux (C-granular CC et F5001 (FC) sans oxydant avec le matériau énergétique de l'exemple. Les résultats sont indiqués à la figure 9.

On a également mesuré les isothermes d'adsorption d'azote (volume microporeux poreux adsorbé par rapport à la pression relative) du matériau énergétique de l'exemple et le matériau carboné nanoporeux C-Granular (CC) et F5001 (FC), calculés par les isothermes d'adsorption d'azote à haute résolution à 77,4 K. Les résultats sont présentés à la figure 10.

Les résultats des mesures de la surface spécifique BET, du volume microporeux et du volume mésoporeux du matériau carboné nanoporeux C-Granular (CC) et F5001 (FC) et des matériaux selon l'exemple est donné en figure 11.

La modification dans la taille moyenne des pores (W) évaluée à partir des distributions de tailles de pores obtenues en utilisant le modèle 2D-NLDFT-HS du matériau carboné nanoporeux C-Granular (CC) et F5001 (FC) et des matériaux selon l'exemple est donnée dans le tableau de la figure 12.

Exemple comparatif 1 :

On a réalisé un mélange physique dans lequel on a ajouté 2,2 g de perchlorate de sodium par g de matériau carboné nanoporeux C-Granular (CC).

On a comparé par DRX les échantillons de matériau carboné nanoporeux (C-Granular CC) sans oxydant avec le matériau de l'exemple comparatif 1. Les résultats sont indiqués à la figure 9.

On a également mesuré les isothermes d'adsorption d'azote (volume microporeux poreux adsorbé par rapport à la pression relative) du matériau de l'exemple comparatif 1 et le matériau carboné nanoporeux C-Granular (CC), calculés par les isothermes d'adsorption d'azote à haute résolution à 77,4 K. Les résultats sont présentés à la figure 10.

Les résultats des mesures de la surface spécifique BET, du volume microporeux et du volume mésoporeux du matériau carboné nanoporeux C-Granular (CC) et du matériau selon l'exemple comparatif est donné en figure 11.

La modification dans la taille moyenne des pores (W) évaluée à partir des distributions de tailles de pores obtenues en utilisant le modèle 2D-NLDFT-HS du matériau carboné nanoporeux C-Granular (CC) et du matériau selon l'exemple comparatif est donnée dans le tableau de la figure 12.

Exemple comparatif 2 :

On a réalisé un mélange physique dans lequel on a ajouté 3,2 g de perchlorate de sodium par g de matériau carboné nanoporeux F 5001 (FC).

On a comparé par RDX les échantillons de matériau carboné nanoporeux (F5001 - FC) sans oxydant avec le matériau de l'exemple comparatif 2. Les résultats sont indiqués à la figure 9.

On a également mesuré les isothermes d'adsorption d'azote (volume microporeux poreux adsorbé par rapport à la pression relative) du matériau de l'exemple comparatif 2 et le matériau carboné nanoporeux F5001 (FC), calculés par les isothermes d'adsorption d'azote à haute résolution à 77,4 K. Les résultats sont présentés à la figure 10.

Les résultats des mesures de la surface spécifique BET, du volume microporeux et du volume mésoporeux du matériau carboné nanoporeux F5001 (FC) et du matériau selon l'exemple comparatif est donné en figure 11.

La modification dans la taille moyenne des pores (W) évaluée à partir des distributions de tailles de pores obtenues en utilisant le modèle 2D-NLDFT-HS du matériau carboné nanoporeux F5001 (FC) (FC) et du matériau selon l'exemple comparatif est donnée dans le tableau de la figure 12.

Il est bien entendu que la présente invention n'est en aucune façon limitée aux formes de réalisations décrites ci-dessus et que bien des modifications peuvent y être apportées sans sortir du cadre des revendications annexées.

**Revendications**

1. Matériau énergétique composite comprenant au moins un matériau nanoporeux et au moins un oxydant inorganique, de préférence choisi dans le groupe des sels de formule générale $X_a Z_b O_c$ où a et b sont des nombres entiers compris entre 0 et 5, et où c représente un nombre entier compris entre 1 et 8, avec X qui représente un contre-anion choisi parmi Na, K, $NH_4$, Li, H, Ca, Mg, Al ou Fe, ainsi que leur combinaisons, avec Z qui représente Mn, Cl, N, S, I, P et O qui représente l'oxygène, **caractérisé en ce que** ledit matériau nanoporeux est un matériau carboné nanoporeux, ledit matériau énergétique composite présente une température d'initiation de la décomposition sur un thermogramme obtenu par calorimétrie différentielle à balayage inférieure à 5 °C/minute dans un creuset fermé (Température de début de pic DSC) de préférence de 50 °C à 200 °C, plus préférentiellement de 100 °C à 150 °C, par rapport à la température d'initiation de la décomposition sur le thermogramme DSC de l'oxydant inorganique, et présente au moins 30%, de préférence au moins 50%, de manière particulièrement préférentielle au moins 70%, de manière encore plus préférentielle au moins 80% de la porosité occupée par ledit oxydant inorganique, et au plus 90% de la porosité, de préférence au plus 95%, plus particulièrement au plus 97%, plus préférentiellement au plus 98% de la porosité occupée par ledit oxydant inorganique, ledit matériau énergétique présentant une sensibilité à l'impact d'au moins 2 J.

2. Matériau énergétique composite selon la revendication 1, présentant une masse volumique apparente supérieure ou égale à 1,0 g/cm³, de préférence supérieure ou égale à 1,25 g/cm³, plus préférentiellement supérieure à 1,35 g/cm³ et encore plus préférentiellement supérieure à 1,5 g/cm³ et/ou

   un volume microporeux de pores ayant un diamètre inférieur à 2 nm compris entre 0,01 cm³/g et 1,0 cm³/g, calculé en appliquant le modèle de Dubinin-Radushkevitch appliqué aux isothermes d'adsorption d'azote à 77,4K et/ou un volume mésoporeux de pores ayant un diamètre compris entre 2 nm et 50 nm compris entre 0,05 cm³/g et 3,0 cm³/g, calculé sur base de la distribution des tailles de pores modélisée par 2D-NLDFT-HS (2D non-linear DFT HS) ou QSDFT (quench-state DFT) appliqué aux isothermes d'adsorption d'azote à 77,4K.

3. Matériau énergétique composite selon la revendication 1 ou la revendication 2, dans lequel ledit matériau carboné nanoporeux est granulaire présentant un $D_{90}$ supérieur ou égal à 160 microns et un $D_{10}$ supérieur ou égal à 900 microns.

4. Matériau énergétique composite selon l'une quelconque des revendications 1 à 3, dans lequel ledit matériau carboné est sous forme de poudre, de préférence présentant une taille moyenne des particules $d_{50}$ comprise entre 25 μm et 50 μm.

5. Matériau énergétique composite selon l'une quelconque des revendications 1 à 3, dans lequel ledit matériau carboné est un monolithe.

6. Formulation énergétique comprenant le matériau énergétique composite selon l'une quelconque des revendications précédentes, de préférence comprenant en outre au moins un additif conventionnel tel qu'un plastifiant, énergétique ou non, un matériau de mise en forme, un stabilisant, un oxydant, identique ou différent, un anti-lueur ou du graphite.

7. Utilisation du matériau énergétique composite selon l'une quelconque des revendications 1 à 5 pour la fabrication d'une formulation énergétique, par exemple la fabrication d'une formulation énergétique explosive, la fabrication d'une formulation énergétique de propulsion.

8. Procédé de production d'un matériau énergétique composite selon l'une quelconque des revendications 1 à 5 comprenant les étapes suivantes :

a) Immersion dudit au moins matériau nanoporeux par ledit au moins un oxydant inorganique présent dans un fluide, éventuellement sous agitation; ledit oxydant inorganique étant de préférence choisi dans le groupe des sels de formule générale $X_aZ_bO_c$ où a et b sont des nombres entiers compris entre 0 et 5, et où c représente un nombre entier compris entre 1 et 8, avec X qui représente un contre-anion choisi parmi Na, K, NH₄, Li,H, Ca, Mg, Al ou Fe ainsi que leur combinaisons, avec Z qui représente Mn, Cl, N, S, P, I et O qui représente l'oxygène,
b) Imprégnation dudit au moins un matériau nanoporeux par ledit au moins un oxydant présent dans un fluide;
c) Obtention d'un matériau énergétique composite, et éventuellement avant que le matériau énergétique composite soit obtenu, une étape de rinçage par un solvant de rinçage et une élimination du solvant de rinçage, éventuellement chargé en oxydant inorganique en excès par évaporation, filtration, vaporisation, extraction, lyophilisation, cryodessiccation, séchage ou leur combinaison

**caractérisé en ce que** ledit matériau nanoporeux est un matériau carboné nanoporeux; et **en ce que** ladite étape d'imprégnation comprend une adsorption dudit au moins un oxydant dans les micropores, mésopores et macropores formant un noyau à température comprise entre 0 et 50 °C entre 15 et 30 °C, de préférence entre 18 et 28°C, plus préférentiellement entre 20 et 26 °C, ladite adsorption étant suivie d'un remplissage des micropores, mésopores et macropores libres par ledit oxydant.

9. Procédé selon la revendication 8, dans lequel ledit matériau énergétique composite contient un rapport entre la fraction atomique d'oxygène libre de l'oxydant par rapport au carbone contenu dans le matériau carboné nanoporeux compris entre 0,5 et 2,5, de préférence comprise entre 1 et 2,2 et plus préférentiellement autour de 2.

10. Procédé selon la revendication 8 ou 9, dans lequel la teneur minimale de carbone dudit matériau carboné nanoporeux compris dans le matériau énergétique composite selon la présente invention, est supérieure à 70% en poids de carbone, de préférence supérieure à 80% en poids de carbone, plus particulièrement supérieure à 90% en poids de carbone par rapport au poids total dudit matériau carboné nanoporeux.

11. Procédé selon l'une quelconque des revendications 8 à 10, dans lequel ledit fluide est une phase liquide comprenant ledit oxydant inorganique dans un solvant,
ladite phase liquide étant de préférence une solution ou suspension colloïdale saturée dudit oxydant inorganique.

12. Procédé selon l'une quelconque des revendications 8 à 11, dans lequel le remplissage des micropores, mésopores et macropores libres est effectué par une évaporation, une filtration, une vaporisation, une extraction, une lyophilisation, une cryodessiccation ou leur combinaison.

13. Procédé selon l'une quelconque des revendications 8 à 12, dans lequel ledit matériau carboné nanoporeux est sous forme de poudre, de préférence ayant une taille des particules comprise entre 25μm et 50μm.

14. Procédé selon l'une quelconque des revendications 8 à 13, dans lequel ledit matériau carboné nanoporeux est sous forme de monolithe.

15. Procédé selon l'une quelconque des revendications 8 à 14, dans lequel ledit matériau énergétique composite récupéré présente une masse volumique apparente supérieure ou égale à 1,0 g/cm³, de préférence supérieure ou égale à 1,25 g/cm³, plus préférentiellement supérieure à 1,35 g/cm³ et encore plus préférentiellement supérieure à 1,5 g/cm³.

**Patentansprüche**

1. Energetisches Verbundmaterial, umfassend mindestens ein nanoporöses Material und mindestens ein anorganisches Oxidationsmittel, das vorzugsweise ausgewählt ist aus der Gruppe der Salze der allgemeinen Formel $X_aZ_bO_c$, wobei a und b ganze Zahlen zwischen 0 und 5 sind, und wobei c eine ganze Zahl zwischen 1 und 8 darstellt, wobei X ein Gegenanion darstellt, das ausgewählt ist aus Na, K, $NH_4$, Li, H, Ca, Mg, Al oder Fe sowie Kombinationen davon, wobei Z Mn, Cl, N, S, I, P und O Sauerstoff darstellt, **dadurch gekennzeichnet, dass** das nanoporöse Material ein nanoporöses kohlenstoffhaltiges Material ist, das energetische Verbundmaterial eine Einsetztemperatur der Zersetzung auf einem DSC-Thermogramm von weniger als 5 °C/Minute in einem geschlossenen Tiegel (DSC-Peak-Anfangstemperatur) von vorzugsweise 50 °C bis 200 °C, bevorzugter 100 °C bis 150 °C, bezogen auf die Einsetztemperatur der Zersetzung auf dem DSC-Thermogramm des anorganischen Oxidationsmittels, aufweist, und mindestens 30 %, vorzugsweise mindestens 50 %, besonders bevorzugt mindestens 70 %, noch bevorzugter mindestens 80 % der Porosität aufweist, die von dem anorganischen Oxidationsmittel eingenommen wird, und höchstens 90 % der Porosität, vorzugsweise höchstens 95 %, insbesondere höchstens 97%, bevorzugter höchstens 98% der Porosität, die von dem anorganischen Oxidationsmittel eingenommen wird, wobei das energetische Material eine Aufprallempfindlichkeit von mindestens 2 J aufweist.

2. Energetisches Verbundmaterial nach Anspruch 1, das eine Schüttdichte von größer als oder gleich wie 1,0 g/cm³, vorzugsweise größer als oder gleich wie 1,25 g/cm³, bevorzugter größer als 1,35 g/cm³ und noch bevorzugter größer als 1,5 g/cm³ aufweist, und/oder

ein mikroporöses Volumen von Poren, die einen Durchmesser von weniger als 2 nm zwischen 0,01 cm³/g und 1,0 cm³/g, berechnet durch Anwendung des Dubinin-Radushkevitch-Modells, das auf Stickstoffadsorptionsisothermen bei 77,4K angewendet wird, aufweist, und/oder ein mesoporöses Volumen von Poren, die einen Durchmesser zwischen 2 nm und 50 nm zwischen 0,05 cm³/g und 3,0 cm³/g, berechnet basierend auf der Porengrößenverteilung, die durch 2D-NLDFT-HS (2D non-linear DFT HS) oder QSDFT (quench-state DFT), angewendet auf die Stickstoffadsorptionsisothermen bei 77,4K, modelliert wird.

3. Energetisches Verbundmaterial nach Anspruch 1 oder 2, wobei das nanoporöse kohlenstoffhaltige Material kornförmig ist und einen $D_{90}$ von größer als oder gleich wie 160 Mikrometern und einen $D_{10}$ von größer als oder gleich wie 900 Mikrometern aufweist.

4. Energetisches Verbundmaterial nach einem der Ansprüche 1 bis 3, wobei das kohlenstoffhaltige Material in Pulverform ist, das vorzugsweise eine mittleren Teilchengröße $D_{50}$ zwischen 25 μm und 50 μm aufweist.

5. Energetisches Verbundmaterial nach einem der Ansprüche 1 bis 3, wobei das kohlenstoffhaltige Material ein Monolith ist.

6. Energieformulierung, umfassend das energetische Verbundmaterial nach einem der vorhergehenden Ansprüche, vorzugsweise ferner umfassend mindestens ein konventionelles Additiv, wie beispielsweise einen energetischen oder nicht-energetischen Weichmacher, ein formgebendes Material, einen Stabilisator, ein gleiches oder anderes Oxidationsmittel, einen Glimmschutz oder Graphit.

7. Verwendung des energetischen Verbundmaterials nach einem der Ansprüche 1 bis 5 für die Herstellung einer energetischen Formulierung, beispielsweise die Herstellung einer explosiven energetischen Formulierung, die Herstellung einer energetischen Antriebsformulierung.

8. Verfahren zur Herstellung eines energetischen Verbundmaterials nach einem der Ansprüche 1 bis 5, umfassend die folgenden Schritte:

a) Eintauchen des mindestens einen nanoporösen Materials in das mindestens eine anorganische Oxidationsmittel, das in einem Fluid vorhanden ist, gegebenenfalls unter Rühren; wobei das anorganische Oxidationsmittel vorzugsweise ausgewählt ist aus der Gruppe der Salze der allgemeinen Formel $X_aZ_bO_c$ wobei a und b ganze Zahlen zwischen 0 und 5 sind, und wobei c eine ganze Zahl zwischen 1 und 8 darstellt, wobei X ein Gegenanion darstellt, das ausgewählt ist aus Na, K, $NH_4$, Li, H, Ca, Mg, Al oder Fe sowie Kombinationen davon, wobei Z Mn, Cl, N, S, I, P und O Sauerstoff darstellt,
b) Imprägnieren des mindestens einen nanoporösen Materials mit dem mindestens einen in einem Fluid vorhandenen Oxidationsmittel;
c) Erlangen eines energetischen Verbundmaterials und gegebenenfalls, bevor das energetische Verbundmaterial erlangt wird, einen Schritt eines Spülens mit einem Spüllösungsmittel und eines Entfernens des Spüllösungsmittels, das gegebenenfalls mit überschüssigem anorganischem Oxidationsmittel beladen ist, durch Verdampfen, Filtrieren, Verdampfen, Extrahieren, Gefriertrocknen, Kryotrocknen, Trocknen oder eine Kombination davon

**dadurch gekennzeichnet, dass** das nanoporöse Material ein nanoporöses kohlenstoffhaltiges Material ist; und dass der Imprägnierungsschritt eine Adsorption des mindestens einen Oxidationsmittels in den Mikroporen, Mesoporen und Makroporen, die einen Kern bilden, bei einer Temperatur zwischen 0 und 50 °C zwischen 15 und 30 °C, vorzugsweise zwischen 18 und 28 °C, bevorzugter zwischen 20 und 26 °C, umfasst, wobei auf die Adsorption ein Füllen der freien Mikroporen, Mesoporen und Makroporen mit dem Oxidationsmittel folgt.

9. Verfahren nach Anspruch 8, wobei das energetische Verbundmaterial ein Verhältnis der Atomfraktion des freien Sauerstoffs des Oxidationsmittels zu dem in dem nanoporösen kohlenstoffhaltigen Material enthaltenen Kohlenstoff von 0,5 bis 2,5, vorzugsweise von 1 bis 2,2 und bevorzugter um 2, enthält.

10. Verfahren nach Anspruch 8 oder 9, wobei der minimale Kohlenstoffgehalt des nanoporösen kohlenstoffhaltigen Materials, das in dem zusammengesetzten energetischen Material nach der vorliegenden Erfindung enthalten ist, mehr als 70 Gewichts-% Kohlenstoff, vorzugsweise mehr als 80 Gewichts-% Kohlenstoff, bevorzugter mehr als 90 Gewichts-% Kohlenstoff, bezogen auf das Gesamtgewicht des nanoporösen kohlenstoffhaltigen Materials, ist.

11. Verfahren nach einem der Ansprüche 8 bis 10, wobei das Fluid eine flüssige Phase ist, umfassend das anorganische Oxidationsmittel in einem Lösungsmittel,
wobei die flüssige Phase vorzugsweise eine gesättigte kolloidale Lösung oder Suspension des anorganischen Oxidationsmittels ist.

12. Verfahren nach einem der Ansprüche 8 bis 11, wobei das Füllen der freien Mikroporen, Mesoporen und Makroporen durch Eindampfen, Filtrieren, Verdampfen, Extrahieren, Gefriertrocknen, Kryotrocknen oder eine Kombination davon erfolgt.

13. Verfahren nach einem der Ansprüche 8 bis 12, wobei das nanoporöse kohlenstoffhaltige Material in Pulverform ist, das vorzugsweise mit einer Teilchengröße zwischen 25 $\mu$m und 50 $\mu$m aufweist.

14. Verfahren nach einem der Ansprüche 8 bis 13, wobei das nanoporöse kohlenstoffhaltige Material in Form eines Monolithen ist.

15. Verfahren nach einem der Ansprüche 8 bis 14, wobei der gewonnene Energetische Verbundmaterial eine Schüttdichte von größer als oder gleich wie 1,0 g/cm$^3$, vorzugsweise größer als oder gleich wie 1,25 g/cm$^3$, bevorzugter größer als 1,35 g/cm$^3$ und noch bevorzugter größer als 1,5 g/cm$^3$ aufweist.

**Claims**

1. Energetic composite material comprising at least one nanoporous material and at least one inorganic oxidant, preferably chosen from the group of salts of general formula $X_aZ_bO_c$ where a and b are integers between 0 and 5, and where c represents an integer between 1 and 8, with X which represents a counter-anion chosen from Na, K, NH$_4$, Li, H, Ca, Mg, Al or Fe, as well as combinations thereof, with Z which represents Mn, Cl, N, S, I, P and O which represents oxygen, **characterised in that** said nanoporous material is a nanoporous carbonaceous material, said energetic composite material has a decomposition initiation temperature on a thermogram obtained by differential scanning calorimetry of less than 5°C/minute in a closed crucible (DSC peak start temperature) preferably from 50°C to 200°C, more preferably from 100°C to 150°C relative to the decomposition initiation temperature on the DSC thermogram of the inorganic oxidant, and has at least 30%, preferably at least 50%, particularly preferably at least 70%, even more preferably at least 80% of the porosity occupied by said inorganic oxidant, and at most 90% of the porosity, preferably at most 95%, more particularly at most 97%, more preferably at most 98% of the porosity occupied by said inorganic oxidant, said energetic material having an impact sensitivity of at least 2 J.

2. Energetic composite material according to claim 1, having a bulk density of greater than or equal to 1.0 g/cm$^3$, preferably greater than or equal to 1.25 g/cm$^3$, more preferably greater than 1.35 g/cm$^3$ and even more preferably greater than 1.5 g/cm$^3$ and/or

   a microporous volume of pores having a diameter of less than 2 nm between 0.01 cm$^3$/g and 1.0 cm$^3$/g, calculated by applying the Dubinin-Radushkevitch model applied to nitrogen adsorption isotherms at 77.4K and/or
   a mesoporous volume of pores having a diameter of between 2 nm and 50 nm between 0.05 cm$^3$/g and 3.0 cm$^3$/g, calculated based on the distribution of pore sizes modelled by 2D-NLDFT-HS (2D non-linear DFT HS) or QSDFT (quench-state DFT) applied to nitrogen adsorption isotherms at 77.4K.

3. Energetic composite material according to claim 1 or claim 2, wherein said nanoporous carbon material is granular having a D$_{90}$ of greater than or equal to 160 microns and a D$_{10}$ of greater than or equal to 900 microns.

4. Energetic composite material according to any one of claims 1 to 3, wherein said carbonaceous material is in powder form, preferably having an average particle size $d_{50}$ of between 25 $\mu$m and 50 $\mu$m.

5. Energetic composite material according to any one of claims 1 to 3, wherein said carbonaceous material is a monolith.

6. Energetic formulation comprising the energetic composite material according to any one of the preceding claims, preferably comprising in addition at least one conventional additive such as a plasticiser, energetic or not, a shaping material, a stabiliser, an oxidant, identical or different, an anti-glow agent or graphite.

7. Use of the energetic composite material according to any one of claims 1 to 5 for the manufacture of an energetic formulation, for example the manufacture of an explosive energetic formulation, the manufacture of a propulsion energetic formulation.

8. Method for producing an energetic composite material according to any one of claims 1 to 5 comprising the following steps:

a) Immersion of said at least nanoporous material with said at least one inorganic oxidant present in a fluid, optionally with stirring; said inorganic oxidant being preferably chosen from the group of salts of general formula $X_aZ_bO_c$ where a and b are integers between 0 and 5, and where c represents an integer between 1 and 8, with X which represents a counter-anion chosen from Na, K, $NH_4$, Li, H, Ca, Mg, Al or Fe as well as combinations thereof, with Z which represents Mn, Cl, N, S, P, I and O which represents oxygen,
b) Impregnation of said at least one nanoporous material with said at least one oxidant present in a fluid;
c) Obtaining of an energetic composite material, and optionally before the energetic composite material is obtained, a step of rinsing with a rinsing solvent and removal of the rinsing solvent, optionally loaded with excess inorganic oxidant by evaporation, filtration, vaporisation, extraction, lyophilisation, cryodesiccation, drying or a combination thereof

**characterised in that** said nanoporous material is a nanoporous carbon material; and **in that** said impregnation step comprises an adsorption of said at least one oxidant in the micropores, mesopores and macropores forming a core at a temperature of between 0 and 50°C between 15 and 30°C, preferably between 18 and 28°C, more preferably between 20 and 26°C, said adsorption being followed by a filling of the free micropores, mesopores and macropores with said oxidant.

9. Method according to claim 8, wherein said energetic composite material contains a ratio between the atomic fraction of free oxygen of the oxidant relative to the carbon contained in the nanoporous carbon material of between 0.5 and 2.5, preferably between 1 and 2.2 and more preferably around 2.

10. Method according to claim 8 or 9, wherein the minimum carbon content of said nanoporous carbon material included in the energetic composite material according to the present invention is greater than 70% by weight of carbon, preferably greater than 80% by weight of carbon, more particularly greater than 90% by weight of carbon relative to the total weight of said nanoporous carbon material.

11. Method according to any one of claims 8 to 10, wherein said fluid is a liquid phase comprising said inorganic oxidant in a solvent, said liquid phase preferably being a saturated colloidal solution or suspension of said inorganic oxidant.

12. Method according to any one of claims 8 to 11, wherein the filling of the free micropores, mesopores and macropores is carried out by evaporation, filtration, vaporisation, extraction, lyophilisation, cryodesiccation or a combination thereof.

13. Method according to any one of claims 8 to 12, wherein said nanoporous carbonaceous material is in powder form, preferably having a particle size of between 25 $\mu$m and 50 $\mu$m.

14. Method according to any one of claims 8 to 13, wherein said nanoporous carbon material is in the form of a monolith.

15. Method according to any one of claims 8 to 14, wherein said recovered energetic composite material has a bulk density greater than or equal to 1.0 g/cm$^3$, preferably greater than or equal to 1.25 g/cm$^3$, more preferably greater than 1.35 g/cm$^3$ and even more preferably greater than 1.5 g/cm$^3$.

*Fig.1*

**Diamètre de pore (nm)**

*Fig. 2*

| Matériau | $S_{BET}$ (m²/g) | $V_{DR}$ (cm³/g) | $V_{mésopores}$ (cm³/g) |
|---|---|---|---|
| C granular | 1143 | 0.38 | 0.54 |

Fig. 3

Fig.4

**Fig.5**

| Matériau | $S_{BET}$ (m²/g) | $V_{DR}$ (cm³/g) | $V_{mésopores}$ (cm³/g) |
|---|---|---|---|
| F5001 | 2606 | 0.85 | 1.83 |

**Fig. 6**

*Fig. 7*

*Fig. 8*

*Fig. 9*

Fig. 10

Principaux paramètres de texture des carbones nanoporeux vierges et après remplissage avec du perchlorate de sodium.

| Matériau | $S_{BET}$ (m²/g) | $V_{micropores}$ (cm³/g) | $V_{mésopores}$ (cm³/g) |
|---|---|---|---|
| NaClO$_4$ | 8 | 0.001 | -- |
| Carbon CC | 1151 | 0.41 | 0.49 |
| Composite CC/NaClO$_4$ (filled 2.2 g/g) | 57 | 0.02 | 0.05 |
| Physical mixture 1 g CC + 2.2 g NaClO$_4$ | 203 | 0.11 | 0.13 |
| Carbon FC | 2595 | 0.72 | 1.62 |
| Composite FC/NaClO4 (filled 3.2 g/g) | 352 | 0.11 | 0.23 |
| Mélange physique 1 g FC + 3.2 g NaClO$_4$ | 587 | 0.16 | 0.37 |

## Fig. 11

Modifications de la taille Moyenne des pores (w) évaluées à partir des distributions de taille de pores obtenues en utilisant la méthode 2D-NLDFT-HS.

| | w< 0.9 nm | 0.9<w<5 nm | w>5 nm |
|---|---|---|---|
| Pristine carbon CC | 13 % | 54 % | 34 % |
| Composite CC/NaClO$_4$ (filled 2.20 g/g) | 5 % | 44 % | 52 % |
| Mélange physique 1 g CC + 2.2 g NaClO$_4$ | 13 % | 52 % | 35 % |
| | **w< 1.3 nm** | **1.3<w<5 nm** | **w>5 nm** |
| Pristine carbon FC | 12 % | 46 % | 42 % |
| Composite FC/NaClO$_4$ (filled 3.2 g/g) | 14 % | 33 % | 52 % |
| Mélange physique 1 g FC + 3.2 g NaClO$_4$ | 13 % | 46 % | 41 % |

## Fig. 12

**EP 3 953 317 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2045230 A
- US 6666935 B
- EP 2138180 A
- US 2003097953 A
- GB 500934 A

**Littérature non-brevet citée dans la description**

- **M. THOMMES et al.** Physisorption of gases, with special reference to the évaluation. *UIPAC 2015 Pure Appl. Chem.,* 2015, vol. 87 (9-10), 1051-1069
- A decade of porous silicon as nano-explosive material. *Monuko du Plessis,* 1-17
- A decade of porous silicon as nano-explosive material. *Monuko du Plessis,* 1-1